# FASCICULE DE BREVET EUROPEEN

(11) **EP 1 145 879 B1**
(45) Date de publication et mention de la délivrance du brevet: **21.01.2004**
(21) Numéro de dépôt: 01107977.9
(22) Date de dépôt: 29.03.2001
(51) Int. Cl.: B60G 17/015, B60G 21/00, B60G 3/01, B60G 7/02, B62D 9/02, B62D 17/00

(54) **Véhicule comportant une suspension verticale, dans le plan de la roue à une variation de carrossage**
Fahrzeug mit einer vertikalen, in der Radebene gelegenen, sturzveränderbaren Aufhängung
Vehicle comprising a vertical, in-wheel suspension with variable camber

(30) Priorité: 10.04.2000 FR 0004596
(43) Date de publication de la demande: 17.10.2001
(73) Titulaire: Conception et Développement Michelin S.A., 1762 Givisiez (CH)
(72) Inventeur: Sebe, Marc, 1723 Marly (CH)
(74) Mandataire: Bauvir, Jacques

(56) Documents cités:
- EP-A- 0 878 332
- EP-A- 0 878 378
- WO-A-87/02951
- DE-A- 2 822 058
- DE-B- 1 214 100
- FR-A- 967 710
- US-A- 4 700 972
- US-A- 4 796 720
- PATENT ABSTRACTS OF JAPAN vol. 012, no. 340 (M-740), 13 septembre 1988 (1988-09-13) & JP 63 101114 A (HONDA MOTOR CO LTD), 6 mai 1988 (1988-05-06)

## Description

La présente invention concerne la liaison au sol de véhicules, notamment de véhicules routiers. Elle concerne tant le guidage d'une roue de véhicule par rapport à la caisse de ce véhicule, que l'organisation du débattement de la roue par rapport au châssis. Elle se rapporte plus particulièrement à des moyens utilisés pour contrôler la position du plan de roue, aussi bien en carrossage par rapport au sol, qu'en débattement tant horizontal que vertical par rapport à la caisse.

La maîtrise des mouvements de débattement revient à dire que le guidage doit assurer une position rigoureusement maîtrisée du plan de la roue par rapport au châssis. En général, on identifie facilement sur un véhicule un plan de symétrie longitudinal et vertical. Pour la suite, convenons que ce plan de symétrie constitue un repère lié au châssis. Le guidage du plan de la roue a pour but de maîtriser aussi rigoureusement que possible la position relative du plan de la roue par rapport au châssis. Rappelons que l'on appelle "plan" de la roue le plan perpendiculaire à l'axe de rotation de la roue, passant par le centre de l'aire de contact avec le sol d'un pneu ou bandage élastique monté sur ladite roue. Il est courant de désigner par " suspension verticale " le débattement de la roue verticalement par rapport au châssis. Il est souhaitable de permettre au moins un faible mouvement dans le sens longitudinal; on parle alors de " suspension horizontale ". On appelle " carrossage " l'angle γ que forme le plan de roue par rapport à une droite perpendiculaire au sol. On appelle " braquage " la rotation du plan de roue autour d'une droite perpendiculaire élevée au centre de l'aire de contact du pneu sur le sol. Enfin, on appelle " roulis " l'inclinaison de la caisse du véhicule autour d'un axe horizontal compris dans ledit plan de symétrie (angle ρ).

Le guidage du plan de la roue induit directement l'attitude du pneu au sol, donc les sollicitations que subit ledit pneu et la position plus ou moins favorable dans laquelle il se trouve pour transmettre des efforts, notamment des efforts dans le sens transversal. Or on sait que ces efforts sont de première importance pour le guidage du véhicule, donc pour la sécurité.

On sait que les véhicules routiers en usage de nos jours subissent un mouvement de roulis en raison même de leur suspension. La force centrifuge provoque en effet un transfert de charge vers l'extérieur du virage, ce qui a pour conséquence un surcroît de compression des suspensions du côté extérieur au virage, et une détente des suspensions du côté intérieur du virage, d'où le roulis. Or ce roulis est à la fois préjudiciable au confort des passagers et à la tenue de route du véhicule par le surcroît de carrossage des roues qu'il provoque. Le moyen le plus couramment employé pour combattre ce roulis consiste à utiliser une ou plusieurs barres antiroulis. Malheureusement, une barre antiroulis ne peut que limiter le roulis, en opposant à celui-ci un couple de réaction. Par principe, elle ne peut empêcher la prise de roulis, donc elle ne peut empêcher l'inclinaison des roues dans un sens défavorable au bon fonctionnement des pneus.

L'objectif de l'invention consiste à procurer un haut niveau de sécurité de fonctionnement des véhicules et un grand confort par une cinématique de suspension permettant à la fois un contrôle actif du carrossage de la roue, et une suspension verticale.

Par la demande de brevet EP 0 878 378, qui sert de base pour la présentation en deux parties de la revendication 1, on connaît déjà une proposition qui décrit un mécanisme de carrossage qui, vu dans un plan vertical perpendiculaire à l'axe longitudinal du véhicule, forme un parallélogramme, combiné à un mécanisme de suspension horizontale formant lui aussi un parallélogramme, vu cette fois dans un plan horizontal. Cela permet de contrôler le plan de roue de façon extrêmement rigoureuse. Cette disposition est toutefois assez encombrante, notamment en largeur.

L'objectif de la présente invention est de parvenir, par une disposition plus compacte, à procurer les mêmes degrés de libertés de mouvement (et leurs contrôles rigoureux) du plan de roue par rapport au sol et par rapport au châssis, tout en laissant plus de place disponible entre les mécanismes de suspension, notamment pour loger la mécanique et/ou l'habitacle.

L'invention propose un véhicule selon la revendication 1.

L'expression " liaison au sol " désigne communément l'ensemble des éléments entre le sol et la caisse ou le châssis d'un véhicule. L'invention propose une cinématique de suspension aussi pure et aussi complète que possible : la liaison au sol non seulement offre une suspension verticale, mais en outre elle autorise à tout moment une modification du carrossage de la roue sans pour autant réduire la course de la suspension verticale ni à la compression ni à la détente, et tout en maintenant la suspension verticale dans des conditions optimales de fonctionnement, notamment parce que le pilotage de l'angle de carrossage permet de diminuer les moments et efforts tranchants apparaissant dans le guidage de la suspension verticale et dû à une force centrifuge. Bien entendu, on ne peut agir directement sur le carrossage d'une roue par rapport au sol ; on le fait indirectement via un mécanisme lié au châssis du véhicule.

Suivant une variante de réalisation, l'invention propose un véhicule à contrôle actif du roulis : l'habitacle du véhicule est monté sur le châssis de telle façon qu'il puisse s'incliner vers l'intérieur du virage en fonction de la force centrifuge. L'habitacle prend un roulis plus naturel et mieux toléré par les occupants du véhicule, à l'instar des engins à deux roues alignées (une moto par exemple). Notons que, bien que le roulis soit une mesure de l'angle d'assiette de l'habitacle par rapport au sol, on agit sur l'angle de roulis indirectement, en prenant appui sur le châssis du véhicule. L'objectif est d'atteindre une plage substantielle de variation de l'angle de roulis de l'habitacle, du même ordre de grandeur que la plage de variation du carrossage. De la sorte, sans nécessairement atteindre les angles de roulis que peut prendre un véhicule à deux roues alignées, l'effet produit est suffisamment perceptible pour modifier radicalement les impressions ressenties par les passagers d'un tel véhicule, et ainsi contribuer à leur confort.

L'invention sera mieux comprise par la description qui va suivre, concernant un véhicule à quatre roues. L'invention s'applique en particulier aux véhicules comportant au moins quatre roues, bien que l'exemple donné ne soit pas limitatif. Parmi les figures annexées,
- la figure 1 est une vue schématique de face, montrant les principaux organes de deux liaisons au sol implantées sur un véhicule ;
- la figure 2 est une vue en plan montrant une liaison au sol selon l'invention ;
- la figure 3 est une vue schématique de face, montrant une variation de carrossage ;
- la figure 4 est une vue en plan montrant un débattement de la suspension horizontale.

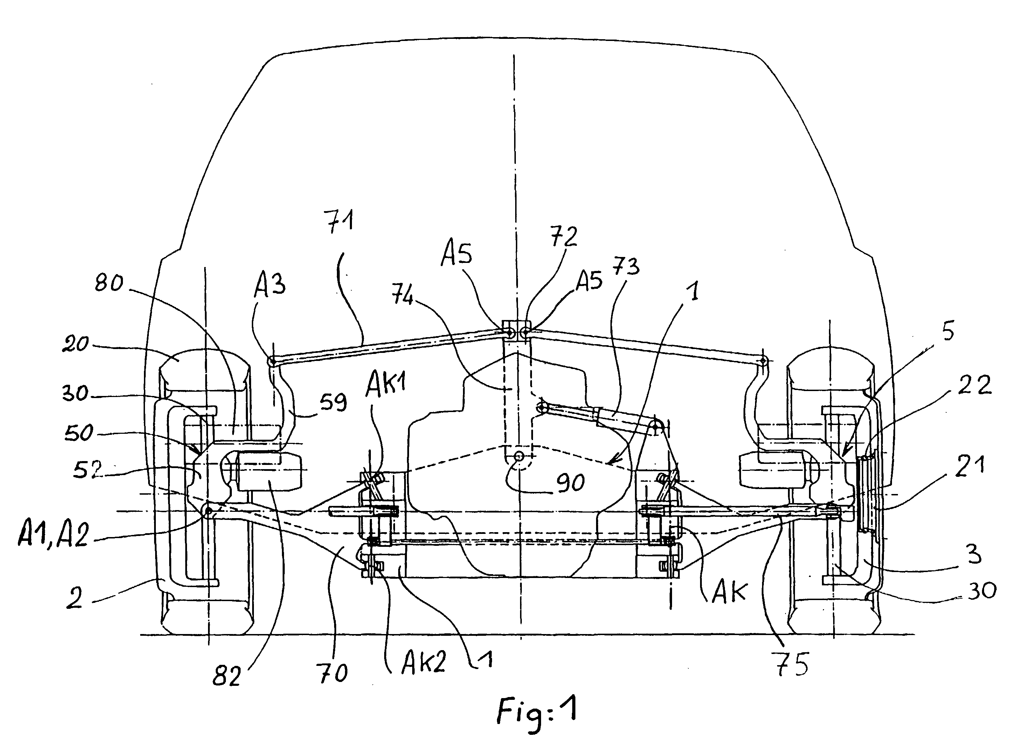

On voit en particulier à la figure 1 un châssis 1 constitué par une poutre centrale, auquel tous les organes du véhicule sont accrochés. De préférence, chaque liaison au sol du véhicule est identique. Quatre roues 2 sont donc montées sur le châssis 1 par des organes identiques, ce qui fait qu'il suffit de décrire une seule des liaisons au sol pour une description complète de l'invention. On voit que sur chaque roue 2 est monté un pneumatique 20 dont le profil en coupe radiale rappelle celui des pneus pour motos, du fait que le pneumatique doit fonctionner à des angles de carrossage très éloignés de zéro degré. La roue 2 est montée sur un porte-roue 3 (on appelle "porte-roue " l'organe non tournant) par l'intermédiaire d'un moyeu 21 et d'un roulement 22, schématisés à la partie droite de la figure 1.

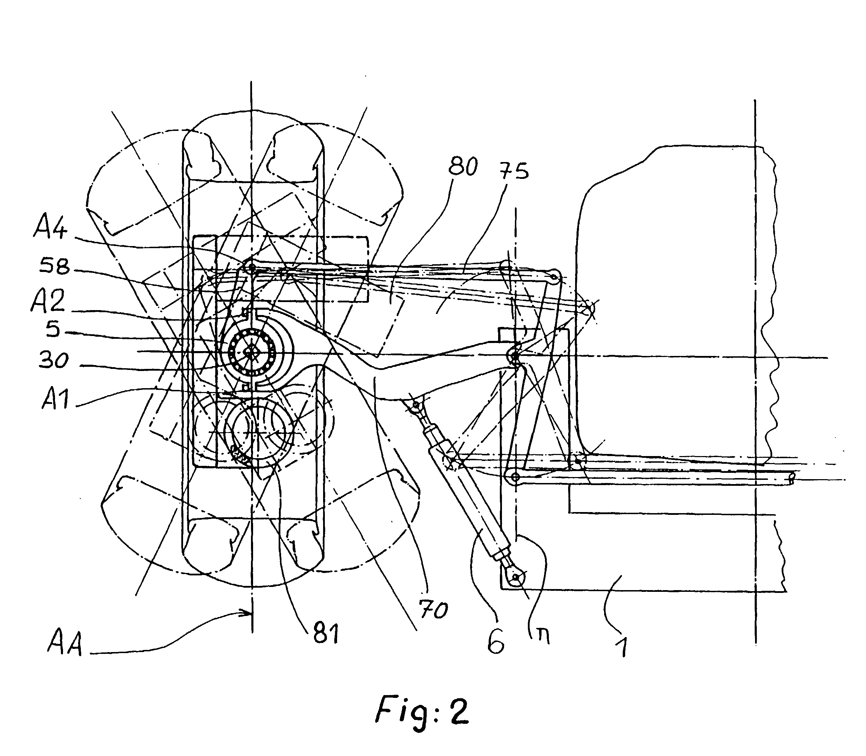

Le porte-roue 3 suit fidèlement tous les mouvements de la roue 2 (sauf bien entendu la rotation de la roue autour de son axe de rotation). Le porte-roue 3 est monté sur un support 5, le débattement voulu pour la suspension verticale intervenant entre le support 5 et le porte-roue 3. Le porte-roue 3 est monté sur le support 5 par l'intermédiaire d'un barreau 30 unique coulissant dans le support 5 et guidé par celui-ci. Le porte-roue est immobilisé sur le barreau 30 aux deux extrémités de celui-ci. Le barreau 30 est disposé dans le volume délimité radialement par la jante de ladite roue 2. Le débattement de suspension d'une roue intervient dans ce cas parallèlement au plan de roue. On peut contrôler le débattement de la roue par exemple par un ressort hélicoïdal 81 (voir figure 2) et par un amortisseur qui peut être monté à l'intérieur du ressort (non représenté pour ne pas surcharger le dessin). Une autre solution sera abordée avec plus de précisions dans la suite.

Les points de montage du support 5 sur le véhicule sont au nombre de trois : un point supérieur A3 à l'extrémité d'une patte 59, ainsi que deux points inférieurs A1, A2 formant un axe géométrique de carrossage AA (visible notamment à la partie gauche de la figure 1, où certains autres organes ne sont pas représentés pour bien faire apparaître le montage du support 5). Le support 5 peut ainsi être rigoureusement maintenu en position (maintien du plan de roue) par ces trois points. Le support 5 est relié au châssis 1 du véhicule par un bras de report de charge 70 monté aux deux points inférieurs A1 et A2, et par une biellette de carrossage 71. Il subsiste ainsi un degré de liberté de basculement du support 5 autour de l'axe géométrique de carrossage AA. Sous l'action de moyens de commande du carrossage, on déplace la biellette de carrossage 71 transversalement par rapport au châssis 1 pour faire varier la position du point A3 par rapport à la position de l'axe géométrique de carrossage AA, ce qui permet de changer la valeur du carrossage de la roue 2.

Le braquage éventuel de la roue 2 est autorisé par un pivot 50 de préférence intégré au support 5. A cet effet et dans ce mode particulier de réalisation, le support 5 comporte un premier élément 51 de guidage de la roue 2 et un deuxième élément 52 de montage sur lequel sont aménagés lesdits trois points A1, A2 et A3 de montage du support 5 sur le véhicule. Le barreau 30 coulisse dans le premier élément 51, ce qui procure le mouvement de suspension verticale, mais ne peut tourner autour de son axe géométrique indépendamment du premier élément 51. Le premier élément 51 est monté dans le deuxième élément 52 par roulements 53 centrés sur l'axe du barreau 30, aucune translation parallèle à l'axe géométrique du barreau 30 du premier élément 51 par rapport au deuxième élément 52 n'étant possible. Les premier élément 51 et deuxième élément 52 forment ainsi un pivot 50. La patte 59 dont il a été question ci-dessus prolonge le premier élément 51 et se termine en le point A3 de commande du carrossage de la roue 2. Un levier 58 prolonge le deuxième élément 52 et se termine en un point A4 de commande du braquage de la roue 2. L'angle de braquage est contrôlé par une biellette de braquage 75, visible notamment à la figure 2 et à la partie droite de la figure 1.

Les extrémités (côté actionneur pour commander le carrossage) des biellettes de carrossage 71 des roues d'un même essieu (c'est à dire des roues 2 situées de part et d'autre du châssis 1 et en regard l'une de l'autre) se rejoignent sensiblement au centre du véhicule où chacune est montée en un point A5 sur une même platine 72. La platine 72 est disposée à l'extrémité d'un levier central 74 articulé sur le châssis 1 en un point situé sur un axe de roulis 90, sur lequel on reviendra dans la suite de la description. Le déplacement transversal de la platine 72 par rapport au châssis 1 est commandé par un vérin de carrossage 73, irréversible ou freiné, dont la longueur est pilotée de façon appropriée. Bien entendu, de par la commande centrale, les roues 2 s'inclinent du même côté, c'est à dire de façon non symétrique par rapport au châssis.

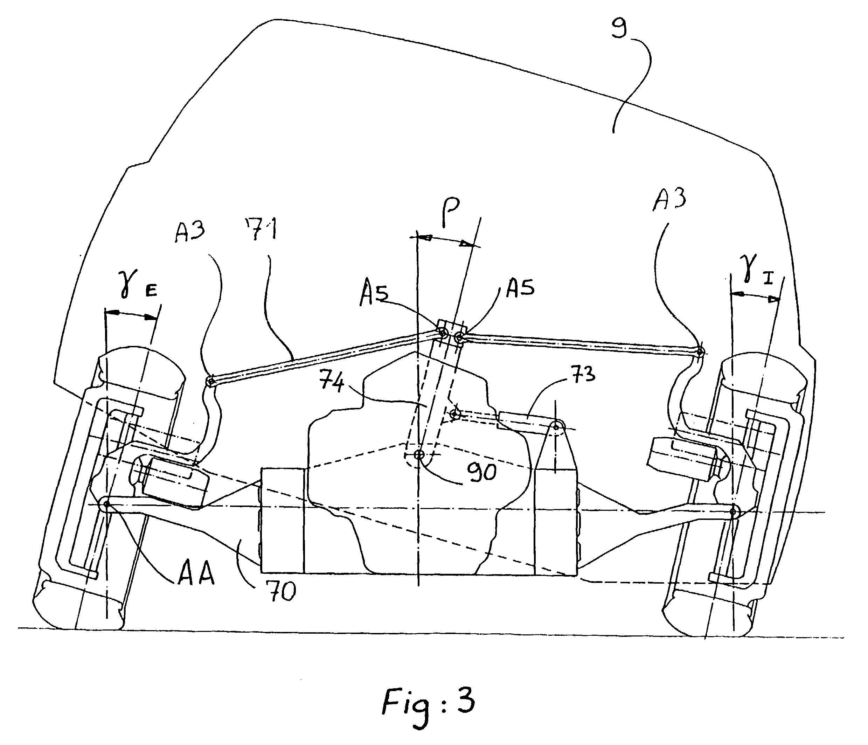

En consultant les figures 1 et 3, on aperçoit bien les quatre points déterminant les caractéristiques géométriques de la commande de l'angle de carrossage des roues 2, à savoir le point situant l'axe géométrique de carrossage AA, le point situant l'axe de roulis 90, et les points A3 et A5. Dans cette réalisation, ces quatre points forment une figure qui s'approche d'un parallélogramme. De part l'imperfection du parallélogramme, les angles de carrossages qui en résultent sont différents à gauche et à droite. Pour un angle de valeur p imposé au levier central 74 par le vérin de carrossage 73, l'angle de carrossage γ_{E} du côté extérieur au virage est de valeur supérieure à la valeur ρ et l'angle de carrossage γ_{I} du côté intérieur au virage est de valeur inférieure à la valeur ρ. De ce fait, la voie au sol du véhicule est sensiblement élargie, ce qui est favorable à la stabilité. En outre, compte tenu que les charges reportées sur les roues en virage sont elles-mêmes très dissymétriques, les roues extérieures au virage étant surchargées, une telle commande de carrossage simplifiée apporte toutes satisfactions.

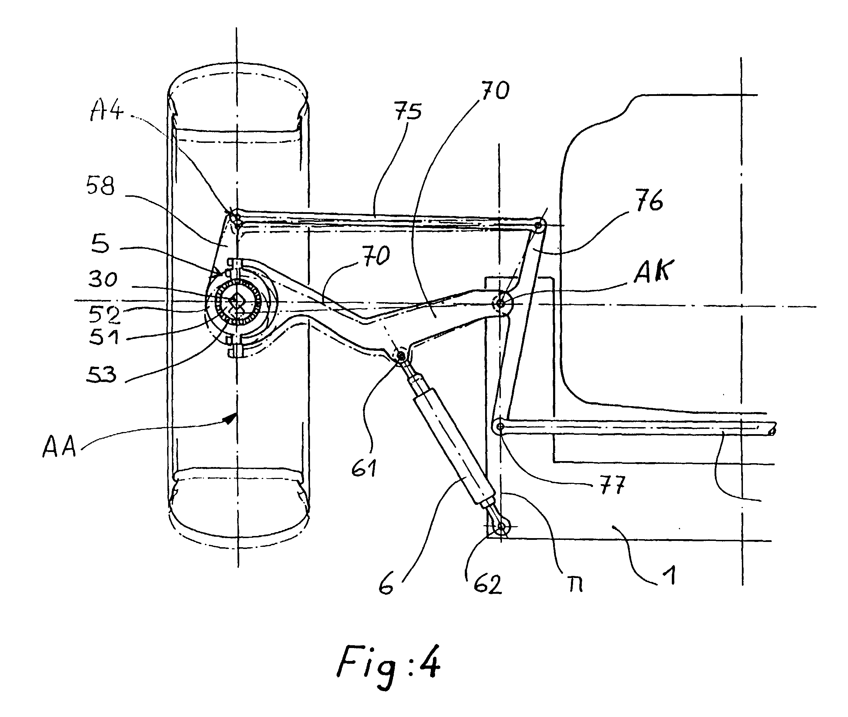

On voit notamment aux figures 1 et 4 que le bras de report de charge 70 est, du côté du châssis 1, est monté suivant un axe géométrique sensiblement vertical AK. On voit deux points d'accrochage superposés AK1 et AK2, et écartés l'un de l'autre. Le bras de report de charge 70 ne peut pas tourner dans le plan vertical (figures 1 et 3). Dès lors, la charge supportée par le châssis 1 est entièrement reportée sur l'ensemble des bras de report de charge 70. Dans le plan horizontal (figures 2 et 4), il faut reprendre le moment autour de l'axe géométrique sensiblement vertical AK dû aux sollicitations horizontales venant des efforts moteurs et/ou freineurs et/ou des chocs exercés sur la roue. Le bras de report de la charge 70 doit de préférence prendre appui sur le châssis 1 en un point distant de l'axe géométrique sensiblement vertical AK. Un élément formant triangulation 6 est à cette fin monté d'une part sur le bras de report de charge 70 à un point intermédiaire 61 entre ses extrémités, et d'autre part sur le châssis à un point distant 62 de l'axe géométrique sensiblement vertical AK du bras de report de charge 70.

L'invention se prête avantageusement à l'implantation d'une suspension horizontale. On peut par exemple monter le bras de report de charge 70 aux points d'accrochage superposés AK1 et AK2 de façon à ce qu'il puisse tourner assez librement autour dudit axe géométrique sensiblement vertical AK, ce qui procure une certaine latitude de mouvement longitudinal au support 5, donc à la roue 2. Et on utilise l'élément formant triangulation 6 pour contrôler le débattement de suspension horizontale du bras de report de charge 70. L'élément formant triangulation 6 est un élément jouissant d'une certaine élasticité, autorisant (mais en le contrôlant) un mouvement d'oscillation du bras de report de charge 70 autour de l'axe géométrique sensiblement vertical AK. Il comporte un moyen procurant une fonction de ressort et un moyen procurant une fonction d'amortissement. Un élément en caoutchouc correctement formulé peut, comme on le sait, procurer ces deux fonctions.

Le mécanisme de carrossage simplifié proposé peut s'accommoder des mouvements de la suspension horizontale, tout en n'introduisant que des variations de carrossage imperceptibles.

Explicitons maintenant la commande du braquage. On voit à la figure 2 que, vue dans un plan horizontal, la biellette de braquage 75 forme un trapèze avec le bras de report de charge 70. La longueur de la biellette de braquage 75 est plus grande que la longueur du bras de report de charge 70. Par ailleurs, la biellette de braquage 75 est actionnée par un levier 76 de commande de direction monté articulé sur l'axe géométrique sensiblement vertical AK du bras de report de charge 70. L'extrémité 77 du levier 76 aboutit dans le plan longitudinal π contenant l'axe géométrique sensiblement vertical AK. La commande de braquage d'une butée de direction à l'autre, par une barre de direction 78, fait décrire à l'extrémité 77 du levier 76 un mouvement symétrique par rapport audit plan longitudinal π. C'est par cette disposition que l'on réalise une commande selon le principe de l'épure de Jeantaud.

Soulignons que l'adoption d'une liaison au sol offrant un carrossage variable sur une grande plage de réglage se marie tout particulièrement bien avec l'utilisation d'une traction par moteurs électriques implantés dans les roues. Il convient donc que les organes mécaniques laisse la place nécessaire à ces moteurs de traction. La mise en oeuvre préférée illustrant l'invention adopte aussi l'implantation d'un moteur électrique de traction 80 déjà décrite dans la demande de brevet EP 0 878 332. Le contrôle du mouvement de suspension verticale peut aussi adopter l'implantation proposée dans la même demande de brevet EP 0 878 332. C'est ce qui est montré aux dessins. Il existe une crémaillère (usinée sur le barreau 30) dont le mouvement est contrôlé par un moteur électrique de suspension 82. Le moteur électrique de suspension 82 reste immobile verticalement quelle que soit la déflexion de la suspension verticale, et il suit les mouvements du plan de roue en braquage et en carrossage.

A la figure 2, on a représenté (en traits interrompus) la position du moteur de traction 80 roue braquée en butée à droite. C'est la position vers laquelle pointe la référence « 80 ». On voit que le bras de report de charge 70 est courbé de façon à dégager l'espace nécessaire, compte tenu du fait que ce moteur de traction 80 accompagne les mouvements du plan de roue en braquage et les mouvements de débattement verticaux de la roue. A la figure 3, on a représenté pour chacune des roues 2 la position du moteur de suspension 82 lorsque les roues 2 sont en butée de carrossage. On voit aux figures 2 et 4 que le bras de report de charge 70 est formé de façon à dégager l'espace nécessaire, compte tenu du fait que ce moteur de traction 80 accompagne les mouvements du plan de la roue en braquage, en carrossage et en débattement. On voit aux figures 1 et 3 que le bras de report de charge 70 et la patte 59 sont formés de façon à dégager l'espace nécessaire, compte tenu du fait que ce moteur de suspension 82 accompagne les mouvements du plan de la roue en braquage et en carrossage.

De préférence, le mécanisme de direction doit rendre l'angle de braquage des roues suffisamment insensible aux variations de carrossage et aux mouvements de suspension horizontale (voire aux variations de roulis de la caisse si celui-ci est contrôlé activement, comme proposé ci-dessous).

Sur un essieu non directeur, on peut utiliser une liaison au sol simplifiée, ne permettant pas le braquage de la roue. Par exemple, le support 5 est monobloc et l'élément formant triangulation 6 est alors de préférence rigide. Le plan de roue est tenu en braquage par le fait que les points A1 et A2 définissant l'axe géométrique de carrossage AA sont suffisamment écartés l'un de l'autre et sont reliés à la même pièce mécanique, à savoir bras de report de charge 70.

Sur un essieu non directeur, on peut aussi utiliser un support 5 en deux éléments 51 et 52 comme décrit ci-dessus et on immobilise le porte-roue en connectant de façon appropriée une biellette au levier 58 du premier élément 51 d'une part et au châssis 1 d'autre part. Si le support 5 recule par rapport au châssis 1, le deuxième élément 52 subit une légère rotation, qui est automatiquement compensée par un léger braquage du premier élément 51 dans le deuxième élément 52. On évite ainsi qu'apparaisse un braquage induit par le déplacement du support le long de la course de suspension horizontale.

Quant à l'habitacle du véhicule, soit il est solidaire du châssis 1, soit il est monté sur le châssis 1 comme l'habitacle 9 du véhicule illustrant l'invention. L'axe de roulis 90, dont il a été question ci-dessus, est un axe longitudinal sensiblement horizontal. Dans ce dernier cas, le véhicule est tel qu'il comporte :
- un habitacle 9 pour le transport de passagers, montée sur le châssis 1 de façon inclinable autour d'un axe de roulis 90 sensiblement longitudinal, de sorte que l'habitacle forme par rapport audit châssis 1 un angle de roulis variable,
- des moyens de contrôle du roulis interposés entre le châssis 1 et l'habitacle, agissant de façon à imposer ledit angle de roulis, dans le même sens que le carrossage imposé aux roues.

De préférence, les moyens de contrôle du roulis sont constitués essentiellement par le vérin de carrossage 73, de sorte que la variation de carrossage des roues 2 et la variation de l'angle de roulis de l'habitacle sont synchrones.

En rendant l'habitacle solidaire du levier de carrossage 74, l'habitacle prend un angle de roulis p dans le sens inverse du sens habituel pour les véhicules de tourisme. Cela contribue au confort des passagers, y compris par une perception de plus grande sécurité. Notons que cela contribue aussi en soi à la sécurité, en déplaçant le centre de gravité du véhicule vers l'intérieur du virage, ce qui diminue la part de charge transférée sur les roues extérieures au virage. Non seulement les pneus travaillent dans une position par rapport au sol plus favorable, mais en outre, dans ce mode de réalisation, la surcharge momentanée des pneus du côté extérieur au virage est moindre que s'il n'y avait pas de correction de carrossage. Les pneus du côté intérieur sont moins délestés, et donc leur aptitude à développer des poussées de dérive est mieux préservée.

Afin de piloter l'angle de carrossage, voire de roulis de l'habitacle, en fonction de la force centrifuge qui s'exerce sur le véhicule, on peut installer sur le véhicule au moins un capteur pour relever la valeur d'au moins un paramètre permettant une évaluation de l'accélération transversale s'exerçant sur le véhicule, des moyens de calcul pour calculer l'amplitude de l'angle de carrossage en fonction de la ou des valeurs relevées. L'angle de carrossage peut être piloté individuellement roue par roue, ou collectivement pour toutes les roues ou pour les roues d'un même essieu.

Il peut s'agir d'une mesure directe de l'accélération centrifuge, ou bien d'une évaluation en fonction de paramètres indirects que sont la vitesse du véhicule et l'angle au volant. Dans tous les cas, des moyens de calcul (par exemple un microprocesseur chargé du programme adéquat) permettent de mettre en oeuvre des stratégies de régulations à l'image de ce que l'on fait pour piloter des suspensions actives, afin de calculer l'angle de roulis à imposer. Une telle stratégie peut tenir compte de diverses lois de commande, comme par exemple une valeur de proportionnalité fixant le niveau d'accélération transversale auquel on atteint l'angle de roulis maximal permis par le mécanisme de roulis.

Sur la base de ce qui vient d'être exposé, l'homme du métier pourra procéder à des adaptations selon ses propres souhaits sans sortir du cadre de la présente invention. Par exemple, rien n'empêche d'ajouter un filtrage entre l'habitacle et le châssis, par exemple par des cales élastiques en caoutchouc. On pourrait bien entendu construire le pivot différemment. L'axe de pivot pourrait ne pas être dans le plan de roue, ou tout en étant dans le plan de la roue, il pourrait être incliné (pour procurer un angle de chasse non nul), selon de nombres variantes constructives.

L'invention s'applique notamment aux véhicules à quatre roues comme les voitures de tourisme. Or la variation d'angle de carrossage dont il est ici question est de grande ampleur, c'est à dire plus proche des valeurs couramment balayées par les motos que des valeurs de réglage pouvant exister dans un véhicule de tourisme classique, à quatre roues. Pour fixer les idées, la plage de variation est de l'ordre de ± 15° à ± 20°. La plage de variation est en tout cas telle que, lorsque la roue bascule autour de son aire de contact avec le sol, le déplacement dans le sens transversal de la partie radialement supérieure de la roue peut atteindre une ampleur supérieure à la largeur de ladite roue.

## Revendications

1. Véhicule comportant :
• un châssis (1) roulant et suspendu,
• au moins deux liaisons au sol comprenant chacune une roue (2), lesdites liaisons au sol étant montées sur ledit châssis (1) de part et d'autre de celui-ci transversalement, la roue (2) de chacune des liaisons au sol étant montée sur un porte-roue (3), le porte-roue (3) étant monté sur un support (5) par un dispositif de suspension verticale autorisant le débattement du porte-roue (3) par rapport au support (5), le mouvement de débattement ayant lieu dans le plan de la roue (2), la course du débattement étant suffisante pour procurer le mouvement de suspension verticale requis, la course du débattement étant contrôlée par des moyens appropriés,
• ledit support (5) étant monté sur ledit châssis (1) par un bras de report de charge (70), à un côté duquel le support est articulé suivant un axe géométrique de carrossage (AA) sensiblement horizontal,
• chaque support (5) étant monté sur ledit châssis (1) d'une façon permettant d'incliner le plan de chaque roue (2) par rapport audit châssis pour imposer aux plans desdites roues (2) un angle de carrossage γ d'amplitude voulue, en inclinant les roues (2) par rapport au sol toutes du même côté,
• une biellette de carrossage (71) étant montée articulée sur le support (5) et distante de l'axe géométrique de carrossage (AA), la biellette de carrossage (71) étant déplaçable transversalement par rapport au châssis (1),
**caractérisé en ce que**
• ledit bras de report de charge est relié par son autre côté sur le châssis suivant un axe géométrique sensiblement vertical (AK),
• un élément formant triangulation (6) reliant le bras de report de charge (70) au châssis (1) de façon à contrôler le moment autour de l'axe géométrique sensiblement vertical (AK).

2. Véhicule selon la revendication 1, **caractérisé en ce que** le support (5) comporte un premier élément (51) de guidage de la roue (2) et un deuxième élément (52) de montage au bras de report de charge (70), les premier élément (51) et deuxième élément (52) formant ensemble un pivot (50) définissant un axe géométrique de pivot permettant le braquage de la roue (2) par rapport au châssis (1), l'angle de braquage étant contrôlé par une biellette de braquage (75).

3. Véhicule selon la revendication 2 dans lequel, vu dans un plan horizontal, la biellette de braquage (75) forme un trapèze avec le bras de report de charge (70).

4. Véhicule selon la revendication 2 ou 3, dans lequel la biellette de braquage (75) est actionnée par un levier (76) de commande de direction monté articulé sur l'axe géométrique sensiblement vertical (AK) du bras de report de charge (70).

5. Véhicule selon l'une des revendications 1 à 4, dans lequel l'élément formant triangulation (6) contrôlant le débattement de suspension horizontale du bras de report de charge est monté d'une part sur le bras de report de charge (70) à un point intermédiaire (61) entre ses extrémités, et d'autre part sur le châssis à un point distant (62) de l'axe géométrique sensiblement vertical (AK) du bras de report de charge (70).

6. Véhicule selon l'une des revendications 1 à 5, dans lequel l'un élément formant triangulation (6) est un élément autorisant un mouvement d'oscillation du bras de report de charge (70) autour de l'axe géométrique sensiblement vertical (AK), de façon à procurer une suspension horizontale.

7. Véhicule selon l'une des revendications 1 à 6, dans lequel les extrémités côté commande des biellettes de carrossage (71) se rejoignent sensiblement au centre du véhicule où chacune est montée sur une même platine (72), dont le déplacement transversal par rapport au châssis (1) est commandé par un vérin de carrossage (73).

8. Véhicule selon l'une des revendications 1 à 7, comportant :
• un habitacle (9) pour le transport de passagers, montée sur le châssis (1) de façon inclinable autour d'un axe de roulis (90) sensiblement longitudinal, de sorte que l'habitacle forme par rapport audit châssis (1) un angle de roulis variable,
• des moyens de contrôle du roulis interposés entre le châssis (1) et l'habitacle, agissant de façon à imposer ledit angle de roulis, dans le même sens que le carrossage imposé aux roues.

9. Véhicule selon la revendication 7 et 8, dans lequel les moyens de contrôle du roulis sont constitués essentiellement par le vérin de carrossage (73), de sorte que la variation de carrossage des roues (2) et la variation de l'angle de roulis de l'habitacle sont synchrones.

10. Véhicule selon l'une des revendications 1 à 9, comportant au moins un capteur pour relever la valeur d'au moins un paramètre permettant une évaluation de l'accélération transversale s'exerçant sur le véhicule, des moyens de calcul pour calculer l'amplitude de l'angle de carrossage en fonction de la ou des valeurs relevées.

## Patentansprüche

1. Fahrzeug mit:
• einem fahrenden und mit einer Aufhängung versehenen Fahrgestell (1),
• mindestens zwei Verbindungen mit dem Boden, die jeweils ein Rad (2) aufweisen, wobei die genannten Verbindungen mit dem Boden auf dem genannten Fahrgestell (1), in Querrichtung beiderseits dessen, montiert sind, das Rad (2) mit jeder der Verbindungen mit dem Boden auf einem Radträger (3) angebracht ist, der Radträger (3) an einem Träger (5) mit einer Vorrichtung für die vertikale Aufhängung montiert ist, die das Einfedern des Radträgers (3) bezüglich des Trägers (5) gestattet, die Einfederbewegung in der Ebene des Rades (2) erfolgt, der Verlauf des Einfederns ausreichend ist, um für die erforderliche Bewegung der Aufhängung zu sorgen, und der Verlauf des Einfederns durch geeignete Mittel geregelt bzw. überwacht wird,
• wobei der genannte Träger (5) auf dem genannten Fahrgestell (1) durch einen Kraftübertragungsarm (70) angebracht ist, an dessen einer Seite der Träger entsprechend einer geometrischen, im wesentlichen horizontalen Sturzachse (AA) angelenkt ist,
• wobei jeder Träger (5) auf dem genannten Fahrgestell (1) auf eine Weise angebracht ist, die es gestattet, die Ebene eines jeden Rades (2) in Bezug auf das genannte Fahrgestell zu neigen, um auf die Ebenen der genannten Räder (2) einen Sturzwinkel γ mit gewünschter Amplitude aufzubringen, indem man die Räder (2) in Bezug auf den Boden alle zur gleichen Seite neigt, und
• wobei ein Sturz-Schwingarm (71) gelenkig auf dem Träger (5) angebracht ist und zur geometrischen Achse des Sturzes (AA) beabstandet ist, und der Sturz-Schwingarm (71) in Querrichtung, in Bezug auf das Fahrgestell (1), versetzbar ist,
**dadurch gekennzeichnet, daß**
• der genannte Kraftübertragungsarm auf seiner anderen Seite mit den Fahrgestell längs einer geometrischen, im wesentlichen vertikalen Achse (AK) verbunden ist, und
• ein eine Triangulation bzw. Dreiecksaufnahme bildendes Element (6) den Kraftübertragungsarm (70) mit dem Fahrgestell (1) derart verbindet, daß das Moment rund um die geometrische, im wesentlichen vertikale Achse (AK) gesteuert wird.

2. Fahrzeug nach Anspruch 1, **dadurch gekennzeichnet, daß** der Träger (5) ein erstes Element (51) zur Führung des Rades (2) und ein zweites Element (52) zur Anbringung am Kraftübertragungsarm (70) aufweist, wobei das erste Element (51) und das zweite Element (52) gemeinsam ein Drehgelenk (50) bilden, das eine geometrische Schwenkachse definiert, die den Lenkeinschlag des Rades (2) in Bezug auf das Fahrgestell (1) gestattet, wobei der Lenkeinschlagwinkel durch einen Lenkhebel (75) gesteuert wird.

3. Fahrzeug nach Anspruch 2, worin, in einer Horizontalebene gesehen, der Lenkhebel (75) zusammen mit dem Kraftübertragungsarm (70) ein Trapez bildet.

4. Fahrzeug nach Anspruch 2 oder 3, worin der Lenkhebel (75) durch einen Richtungsssteuerhebel (76) betätigt wird, der gelenkig auf der geometrischen, im wesentlichen vertikalen Achse (AK) des Kraftübertragungsarmes (70) angebracht ist.

5. Fahrzeug nach einem der Ansprüche 1 bis 4, worin das Element, das die Dreiecksaufnahme (6) bildet und das Einfedern der horizontalen Aufhängung des Kraftübertragungsarmes steuert, einerseits auf dem Kraftübertragungsarm (70) an einem zwischen seinen Enden dazwischenliegenden Punkt (61) und andererseits auf dem Fahrgestell an einem Punkt (62) angebracht ist, der zur geometrischen, im wesentlichen vertikalen Achse (AK) des Kraftübertragungsarmes (70) beabstandet ist.

6. Fahrzeug nach einem der Ansprüche 1 bis 5, worin das eine Element, das die Dreiecksaufnahme (6) bildet, ein Element ist, das eine Oszillationsbewegung des Kraftübertragungsarmes (70) rund um die geometrische, im wesentlichen vertikale Achse (AK) derart ermöglicht, daß für eine horizontale Aufhängung gesorgt ist.

7. Fahrzeug nach einem der Ansprüche 1 bis 6, worin die steuerseitigen Enden der Sturz-Schwingarme (71) sich im wesentlichen in der Mitte des Fahrzeuges zusammenfügen, wo jeder auf ein und derselben Platine (72) angebracht ist, deren Verlagerung in Querrichtung in Bezug auf das Fahrgestell (1) von einem Sturz-Stellglied (73) gesteuert ist.

8. Fahrzeug nach einem der Ansprüche 1 bis 7, mit
• einem Fahrgastraum (9) für die Beförderung von Fahrgästen auf dem Fahrgestell (1), der derart angebracht ist, daß er um eine im wesentlichen in Längsrichtung verlaufende Rollachse (90) derart neigbar ist, daß der Fahrgastraum in Bezug auf das genannte Fahrgestell (1) einen variablen Rollwinkel bildet, und
• Mitteln zum Steuern der Rolllage, die zwischen dem Fahrgestell (1) und dem Fahrgastraum angeordnet sind, und die derart wirksam sind, daß sie den genannten Rollwinkel in der gleichen Richtung wie den Sturz aufbringen, der auf die Räder aufgebracht ist.

9. Fahrzeug nach Anspruch 7 und 8, worin die Mittel zum Steuern der Rolllage im wesentlichen vom Stellglied (73) für den Sturz gebildet sind, so daß die Änderung des Sturzes der Räder (2) und die Änderung des Rollwinkels des Fahrgastraumes synchron verlaufen.

10. Fahrzeug nach einem der Ansprüche 1 bis 9, mit mindestens einem Meßfühler, um den Wert mindestens eines Parameters zu ermitteln, der eine Wertung der Querbeschleunigung gestattet, die auf das Fahrzeug einwirkt, sowie Mitteln zum Errechnen der Amplitude des Sturzwinkels in Abhängigkeit von dem oder den ermittelten Wert(en).

## Claims

1. Vehicle comprising:
• a rolling and suspended chassis (1),
• at least two ground contact systems each comprising a wheel (2), the said ground contact systems being mounted on the said chassis (1) transversely on either side thereof, the wheel (2) of each ground contact system being mounted on a stub axle (3), the stub axle (3) being mounted on a support (5) by a vertical suspension device that permits vertical deflection of the stub axle (3) relative to the support (5), the deflection movement taking place in the plane of the wheel (2), the deflection path being sufficient to permit the vertical suspension movement required, and the deflection path being controlled by appropriate means,
• the said support (5) being mounted on the said chassis (1) by a load transfer arm (70), at one side of which the support is articulated along an essentially horizontal geometrical camber axis (AA),
• each support (5) being mounted on the said chassis (1) in a manner that makes it possible to incline the plane of each wheel (2) relative to the said chassis in order to impose on the planes of the said wheels (2) a camber angle γ of the desired amplitude, by inclining the wheels (2) relative to the ground all on the same side,
• a camber control rod (71) being mounted articulated to the support (5) and some distance away from the geometrical camber axis (AA), the camber control rod (71) being able to move transversely relative to the chassis (1),
**characterised in that**
• the said load transfer arm is connected at its other side to the chassis along an essentially vertical geometrical axis (AK),
• a triangulation-forming element (6) connects the load transfer arm (70) to the chassis (1), such that it controls the torque moment about the essentially vertical geometrical axis (AK).

2. Vehicle according to Claim 1,
**characterised in that**
the support (5) comprises a first element (51) that steers the wheel (2) and a second element (52) on which the load transfer arm (70) is mounted, the first and second elements (51) and (52) together forming a pivot (50) that defines a geometrical pivot axis which enables the wheel (2) to be steered relative to the chassis (1), the steering angle being controlled by a track rod (75).

3. Vehicle according to Claim 2 in which, viewed in a horizontal plane, the track rod (75) forms a trapezium with the load transfer arm (70).

4. Vehicle according to Claims 2 or 3, in which the track rod (75) is actuated by a direction control lever (76) mounted articulated to the essentially vertical geometrical axis (AK) of the load transfer arm (70).

5. Vehicle according to any of Claims 1 to 4, in which the triangulation-forming element (6) which controls the horizontal suspension deflection of the load transfer arm is mounted on the one hand on the load transfer arm (70) at a point (61) intermediate between its ends, and on the other hand on the chassis at a point (62) some distance away from the essentially vertical geometrical axis (AK) of the load transfer arm (70).

6. Vehicle according to any of Claims 1 to 5, in which the triangulation-forming element (6) is an element that permits an oscillation movement of the load transfer arm (70) about the essentially vertical geometrical axis (AK), such that a horizontal suspension is procured.

7. Vehicle according to any of Claims 1 to 6, in which the control-side ends of the camber control rods (71) are essentially united at the centre of the vehicle, where each is mounted on the same plate (72), whose transverse movement relative to the chassis (1) is controlled by a camber control jack (73).

8. Vehicle according to any of Claims 1 to 7, comprising:
• a passenger compartment (9) for the transport of passengers, mounted on the chassis (1) and able to tilt about an essentially longitudinal roll axis (90), such that the passenger compartment can move through a variable roll angle relative to the said chassis (1),
• means for controlling the roll interposed between the chassis (1) and the passenger compartment, which act so as to impose the said roll angle in the same direction as the camber imposed on the wheels.

9. Vehicle according to Claims 7 and 8, in which the roll control means consist essentially of the camber control jack (73), such that the camber variation of the wheels (2) and the variation of the roll angle of the passenger compartment are synchronous.

10. Vehicle according to any of Claims 1 to 9, comprising at least one sensor to detect the value of at least one parameter that enables evaluation of the transverse acceleration acting on the vehicle, and computation means for calculating the amplitude of the camber angle as a function of the value(s) determined.
